(19) **Europäisches Patentamt**

**European Patent Office**

**Office européen des brevets**

(11) **EP 0 821 500 B1**

(12) **FASCICULE DE BREVET EUROPEEN**

| | |
|---|---|
| (45) Date de publication et mention de la délivrance du brevet:<br>**28.04.2004  Bulletin 2004/18** | (51) Int Cl.⁷: **H04L 1/00** |

(21) Numéro de dépôt: **97401751.9**

(22) Date de dépôt: **21.07.1997**

(54) **Décodage multiple**

Mehrfachdekodierung

Multiple decoding

(84) Etats contractants désignés:
**AT BE CH DE DK ES FI GB GR IE IT LI LU MC NL PT SE**
Etats d'extension désignés:
**RO**

(30) Priorité: **24.07.1996  FR 9609311**

(43) Date de publication de la demande:
**28.01.1998  Bulletin 1998/05**

(73) Titulaire: **NORTEL NETWORKS France**
**78117 Châteaufort (FR)**

(72) Inventeurs:
• **Roseiro, Albert**
**92400 Courbevoie (FR)**
• **Belveze, Fabrice**
**78310 Maurepas (FR)**
• **Lasne, Xavier**
**78650 Beynes (FR)**

(74) Mandataire: **Loisel, Bertrand**
**Cabinet Plasseraud**
**65/67 rue de la Victoire**
**75440 Paris Cedex 09 (FR)**

(56) Documents cités:
**EP-A- 0 520 969        WO-A-95/08889**
**US-A- 5 400 362        US-A- 5 467 374**

• WU & WU: "A new short-block digital transmission scheme with adaptive MLSE for mobile radio channels" PROCEEDINGS OF THE VEHICULAR TECHNOLOGY CONFERENCE, 8 - 10 juin 1994, NEW YORK, US, pages 243-247, XP000496671
• BELZILE & HACCOUN: "Bidirectional breadth-first algorithms for the decoding of convolutional codes" IEEE TRANSACTIONS ON COMMUNICATIONS, vol. 41, no. 2, février 1993, NEW YORK US, pages 370-380, XP000392944

EP 0 821 500 B1

**Description**

La présente invention concerne un procédé de démodulation numérique et de décodage. Elle s'applique notamment à un dispositif récepteur mettant en oeuvre une technique de diversité de réception.

Les techniques de diversité sont bien connues dans le domaine de la transmission numérique. Parmi ces techniques, on peut citer :

- la diversité spatiale, utilisable notamment en transmission radio lorsque plusieurs capteurs de réception sont disposés à des emplacements différents ;
- la diversité de fréquence lorsque la même information est transmise simultanément sur des fréquences différentes ;
- la diversité temporelle en cas de répétition de la même information.

Ces différentes techniques de diversité peuvent également être combinées entre elles. L'intérêt de ces techniques est qu'elles permettent d'améliorer les taux d'erreur binaire dans les estimations produites par le dispositif récepteur. En contrepartie, elles ont généralement l'inconvénient de requérir des ressources supplémentaires, en termes de bande passante et/ou de complexité des dispositifs émetteur et récepteur.

Pour combiner les estimations multiples obtenues par le récepteur à diversité, il existe de nombreuses méthodes, parmi lesquelles on peut citer :

- la méthode de sélection consistant simplement à choisir l'observation présentant le meilleur rapport signal/bruit ;
- la méthode dite "equal gain combining", dans laquelle on prend une décision à partir de la somme des observations après mise en phase ;
- la méthode dite "maximum ratio combining", dans laquelle on prend une décision à partir de la somme des carrés des observations mises en phase et divisées par la puissance estimée des bruits dont elles sont affectées. Cette dernière méthode fournit un rapport signal/bruit maximal après recombinaison.

La majorité des systèmes de transmissions numériques font appel à un codage/décodage canal améliorant leur robustesse aux perturbations induites par le canal de transmission. Les codeurs correcteurs introduisent de la redondance dans l'information transmise, que les décodeurs associés exploitent pour corriger des erreurs dans le signal reçu. Deux grandes familles de codes sont habituellement utilisées : les codes convolutifs et les codes en blocs (Golay, BCH, Reed-Solomon etc...). Les capacités de correction de ces codes sont optimales lorsque les probabilités d'erreur sont décorrélées d'un symbole au suivant, ce qui est le cas par exemple des canaux à bruit blanc additif gaussien. Lorsque cette condition de décorrélation n'est pas remplie, ce qui est notamment le cas des canaux radio à fading de Rayleigh ou de Rice, le codage/décodage canal comporte en outre un entrelacement/désentrelacement consistant en une permutation des symboles destinée à éparpiller, à l'entrée du décodeur correcteur, les erreurs survenant par paquets sur le canal de propagation.

Dans la plupart des systèmes, le décodeur canal traite les estimations, dures ou douces, fournies par le démodulateur. Dans le cas d'un récepteur à diversité, il traite les estimations obtenues par recombinaison des estimations multiples.

Dans l'article "Channel Coding with Multilevel/Phase Signals" (IEEE Trans. on Information Theory, Vol. IT-28, N°1, janvier 1982, pages 55-67), G. Ungerboeck a introduit le concept de modulation codée faisant coopérer la modulation/démodulation avec le codage/décodage canal. Le récepteur démodule et corrige les erreurs simultanément en utilisant un supertreillis dont les états tiennent compte d'états de modulation et d'états de codage. Cette méthode permet des gains appréciables car le démodulateur tire parti des bits protégés au niveau microscopique par le code correcteur. Elle a ainsi connu un succès important dans les transmissions filaires et par satellite, pour lesquelles les conditions de propagation ne sont pas trop difficiles. Mais une limitation de cette méthode est qu'elle n'est pas compatible avec la présence d'un entrelacement, car le supertreillis de démodulation prendrait alors une taille non réaliste.

Un but de la présente invention est de proposer une nouvelle façon de combiner des estimations multiples de symboles numériques transmis en profitant de la présence de symboles protégés parmi les symboles transmis.

L'invention propose ainsi un procédé de démodulation numérique et de décodage, dans lequel un dispositif récepteur effectue N démodulations distinctes fournissant chacune un jeu d'estimations respectives de symboles successifs d'une trame, certains de ces symboles comportant de la redondance introduite par un codage correcteur d'erreurs appliqué par un dispositif émetteur. Selon l'invention, le dispositif récepteur décode chacun des N jeux d'estimations selon un processus complémentaire dudit codage correcteur d'erreurs, le décodage de chaque jeu d'estimations comportant une mesure d'un degré d'erreur, le dispositif récepteur sélectionnant un des N jeux d'estimations pour lequel le degré d'erreur mesuré est minimal.

De cette façon, le résultat final de la démodulation profite de l'information de redondance apportée par le codeur canal. Il suffit que certains seulement des symboles de la trame soient codés avec redondance pour que l'ensemble de la trame démodulée en bénéficie.

L'approche peut être comparée à celle d'Ungerboeck, mais elle considère la trame macroscopiquement et non microscopiquement. Ceci permet notamment la présence d'un entrelacement, contrairement aux modulations codées.

L'invention s'applique non seulement aux recombinaisons d'estimations multiples obtenues par une technique de diversité, mais aussi au cas où deux au moins des N jeux d'estimations des symboles sont obtenus en démodulant un même segment de signal reçu par des méthodes différentes (un cas de figure où typiquement, les erreurs d'estimation seront souvent corrélées).

Dans un mode de réalisation particulier, au moins deux des N démodulations distinctes sont effectuées sur un même segment de signal correspondant à une trame de symboles d'un signal numérique modulé par le dispositif émetteur, ledit segment de signal étant reçu par le dispositif récepteur après transmission du signal numérique modulé par l'intermédiaire d'un canal de transmission, la première de ces deux démodulations comprenant les étapes suivantes :

- estimation de premiers paramètres de démodulation à une première extrémité du segment ; et
- calcul de premières estimations de symboles de la trame sur la base des premiers paramètres de démodulation estimés et du segment de signal parcouru depuis la première extrémité vers une seconde extrémité,

et la seconde de ces deux démodulations comprenant les étapes suivantes :

- estimation de seconds paramètres de démodulation à la seconde extrémité du segment et
- calcul de secondes estimations de symboles de la trame sur la base des seconds paramètres de démodulation estimés et du segment de signal parcouru depuis la seconde extrémité vers la première extrémité.

Cette façon de procéder conduit à des gains appréciables sur le taux d'erreur binaire, à partir d'une seule observation du signal.

D'autres particularités et avantages de la présente invention apparaîtront dans la description ci-après d'exemples de réalisation non limitatifs, en référence aux dessins annexés, dans lesquels :

- la figure 1 est un schéma synoptique montrant un dispositif émetteur et un dispositif récepteur mettant en oeuvre la présente invention ;
- la figure 2 est un diagramme montrant la structure de trames de signal dans un exemple de réalisation de la présente invention ;
- les figures 3 et 4 sont des organigrammes de procédures de démodulation appliquées par le dispositif récepteur dans les deux sens de démodulation ;
- la figure 5 est un graphique montrant des exemples de vraisemblances obtenues dans chaque sens de démodulation ;
- les figures 6 à 11 sont des graphiques montrant les performances d'un dispositif récepteur tel que celui de la figure 1 ; et
- la figure 12 montre un autre mode de réalisation d'un dispositif récepteur selon l'invention.

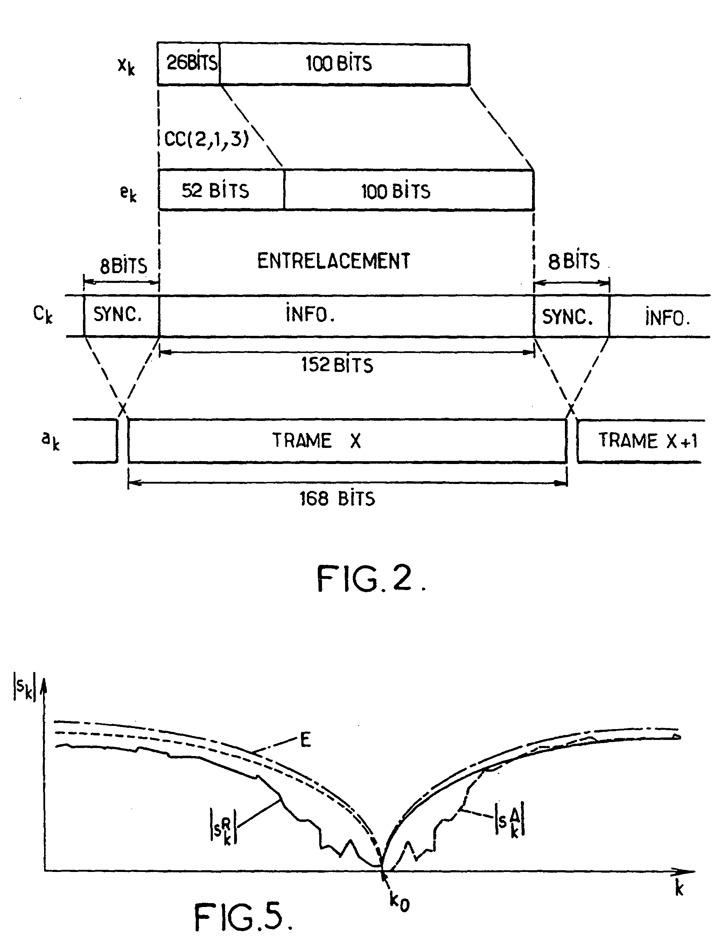

L'invention est décrite ci-après dans son application aux radiocommunications numériques entre un dispositif émetteur 10 et un dispositif récepteur 20. Le dispositif émetteur 10 comporte un codeur source 12 (un vocodeur dans le cas d'un système de téléphonie) qui délivre un flux de données numériques $x_k$ organisées en trames successives. Dans l'exemple de réalisation illustré par la figure 2, le signal $x_k$ est organisé en trames de 126 bits à un débit 1/T=8 kbit/s.

Un codeur canal 14 traite les bits délivrés par le codeur source pour améliorer la robustesse aux erreurs de transmission. Dans l'exemple de la figure 2, le codeur canal 14 applique un code convolutif CC(2,1,3) de rendement 1/2 aux 26 premiers bits de la trame $x_k$. Les 52+100=152 bits résultants $e_k$ sont ensuite soumis à un entrelacement destiné à casser les paquets d'erreurs que peut introduire le phénomène de fading de Rayleigh. Un mot de synchronisation de 8 bits est inséré après chaque trame de 152 bits d'information entrelacés pour former le signal $c_k$ que le codeur 14 adresse au modulateur 16. Ce dernier forme le signal radio s(t) qui est amplifié puis appliqué à l'antenne 18 du dispositif émetteur 10. Dans l'exemple considéré, les symboles $c_k$ sont binaires ($c_k$=0 ou 1).

La modulation employée est par exemple une modulation GMSK avec un paramètre BT=0,25 (voir K. MUROTA et al : "GMSK modulation for digital mobile radio telephony", IEEE Trans. on Communications, Vol. COM-29, N°7, Juillet 1981, pages 1044-1050).

Le dispositif récepteur 20 comprend un démodulateur 24 recevant le signal capté par l'antenne 22 et amplifié. Le démodulateur 24 délivre deux jeux d'estimations des symboles émis $c_k$. Ces estimations sont notées $g_k^A$, $g_k^R$ dans

le cas de décisions douces, et $d_k^A$, $d_k^R$ dans le cas de décisions dures. Si les symboles $c_k$ sont M-aires et compris entre 0 et M-1, un choix de représentation possible pour l'estimation douce $g_k^A$ ou $g_k^R$ est de la forme :

$$g_k^A = p_k^A . \exp(2j\pi d_k^A/M),$$

ou

$$g_k^R = p_k^R . \exp(2j\pi d_k^R/M),$$

c'est-à-dire que, dans ce cas, son argument $2\pi d_k^A/M$ ou $2\pi d_k^R/M$ représente la valeur la plus probable $d_k^A$ ou $d_k^R$ du symbole $c_k$, tandis que son module $p_k^A$ ou $p_k^R$ est une mesure de la vraisemblance de cette valeur $d_k^A$ ou $d_k^R$. Dans le cas de symboles binaires (M=2), le nombre $g_k^A$ ou $g_k^R$ est réel et appelé "softbit", et son signe $2d_k^A-1$ ou $2d_k^R-1$ donne directement la valeur la plus probable du symbole signé $2c_k-1$.

Le dispositif récepteur 20 comporte un étage de décodage canal 26 dual du codeur canal 14 de l'émetteur. Dans l'exemple considéré, l'étage 26 opère trame par trame la permutation des bits inverse de celle correspondant à l'entrelacement appliqué par l'émetteur, et décode les 52 bits redondants en utilisant le treillis de Viterbi correspondant au code convolutif employé. Dans l'exemple représenté, l'étape 26 comporte deux décodeurs distincts, l'un 26$^A$ opérant sur les premières estimations $g_k^A$ ou $d_k^A$ fournies par le démodulateur 24, l'autre 26$^R$ opérant sur les secondes estimations $g_k^R$ ou $d_k^R$. Chaque décodeur 26$^A$, 26$^R$ restitue des estimations respectives $y_k^A$, $y_k^R$ des bits $x_k$. Comme il est usuel en transmissions numériques, le décodage de Viterbi exécuté par le décodeur 26$^A$ ou 26$^R$ peut être à décisions dures lorsque le démodulateur 24 fournit seulement les $d_k^A$ ou $d_k^R$, ou à décisions douces lorsque le démodulateur 24 fournit les $g_k^A$ ou $g_k^R$.

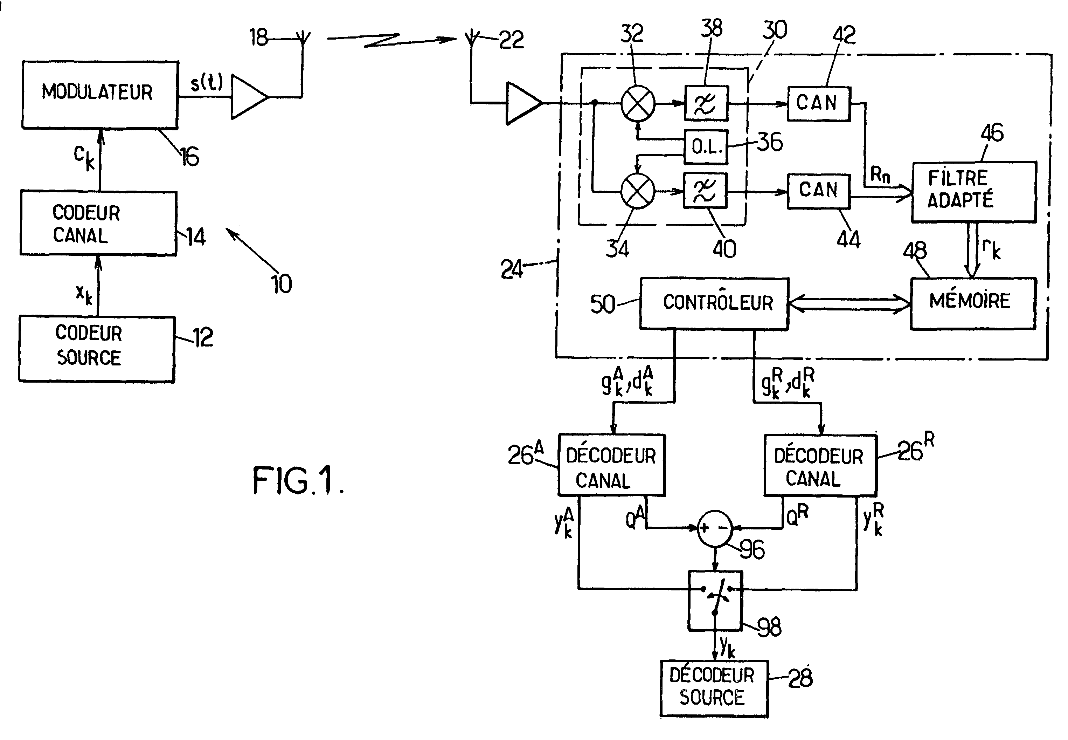

Comme le montre la figure 1, le démodulateur 24 comporte un étage radio 30 assurant la conversion en bande de base du signal reçu. Au moyen de deux mélangeurs 32, 34, le signal radio reçu est mélangé à deux ondes radio en quadrature à la fréquence porteuse délivrées par un oscillateur local 36, et les signaux résultants sont soumis à des filtres passe-bas 38, 40 pour obtenir une composante en phase et une composante en quadrature. Ces deux composantes sont échantillonnées et quantifiées par des convertisseurs analogique-numérique 42, 44 à une fréquence au moins égale à la fréquence des bits transmis. On note $R_n$ les échantillons complexes du signal numérique en bande de base délivrés par les convertisseurs 42, 44.

Dans l'exemple représenté sur la figure 1, le démodulateur 24 opère selon un algorithme séquentiel pour démoduler des symboles binaires. Dans le cas de la modulation GMSK, on peut réaliser une démodulation séquentielle en utilisant l'approximation suivante pour le signal modulé en bande de base s(t) :

$$s(t) = \sum_{k=-\infty}^{+\infty} j^k . a_k . h(t-kT) \qquad (4)$$

Cette expression correspond à une approximation au premier ordre de la décomposition proposée par P.A. LAURENT dans son article "Exact and Approximate Construction of Digital Phase Modulations by Superposition of Amplitude Modulated Pulses (AMP)", IEEE Trans. on Communications, Vol. COM-34, n°2, Février 1986, pages 150-160. Cet article explique également la méthode de calcul de la fonction h(t), qui, dans le cas de la modulation GMSK avec BT=0,25, correspond à une impulsion de largeur 2T environ centrée sur t=0. Dans l'expression (4), les symboles binaires $a_k$, de valeur $\pm 1$, correspondent aux bits $c_k$ codés différentiellement : $a_k = a_{k-1}.(2c_k-1)$.

Le canal radio est affecté d'évanouissements correspondant à la somme en opposition de phase de trajets multiples provoqués par différentes réflexions du signal émis sur des obstacles proches ou lointains. La dispersion temporelle de ces trajets étant usuellement de l'ordre de 12 µs, durée faible devant la durée d'un bit (T=125 µs dans l'exemple numérique considéré), on représente le canal de propagation par une variable complexe A(t) correspondant à une atténuation de Rayleigh et un déphasage avec un unique trajet. La fréquence des évanouissements est de $2f_d$, $f_d$ étant la fréquence Doppler associée à la variation de la distance entre l'émetteur et le récepteur : $f_d = f_0.v/c$, si $f_0$ est la fréquence centrale du canal, v est la vitesse relative de l'émetteur et du récepteur et c est la célérité de la lumière. On trouve alors pour une vitesse de 100 km/h une fréquence Doppler de l'ordre de 41,67 Hz dans le cas où $f_0 \simeq 450$ MHz, d'où un évanouissement (83,33 Hz) toutes les 12 ms. Ceci autorise donc plus d'un évanouissement par trame, et surtout une fréquence d'évanouissement supérieure à la fréquence des mots de synchronisation (50 Hz).

La présence de ces évanouissements rapides, et plus généralement la variation rapide du canal devant la durée de la trame, imposent une estimation fréquente du canal, et donc un risque important de propagation d'erreurs dues à la rétroaction de la boucle de décision. En effet, en cas d'erreurs sur les symboles binaires décidés lors de la démodulation, ces erreurs vont conduire à des estimations erronées du canal, qui vont elles-mêmes produire de nouvelles erreurs de démodulation.

On note $A_k = A(kT)$ (k=0 à 167) les valeurs complexes du canal de propagation échantillonnées à 8 kHz en bande de base. Le canal est en outre affecté d'un bruit blanc additif gaussien B(t) de variance N0/2, noté $B_k$ après échantillonnage et filtrage adapté. Le signal reçu, après filtrage adapté du signal par le filtre 46 de réponse h(t), est alors de la forme :

$$r_k = A(kT) \sum_{n=-\infty}^{\infty} j^n a_n H((n-k)T) + B(kT)$$

$$= A_k \left[ j^{k-1} a_{k-1} H(-T_b) + j^k a_k H(0) + j^{k+1} a_{k+1} H(+T) \right] + B_k$$

où H(t) est la fonction d'autocorrélation connue de la fonction h(t). Dans cette expression, on a fait l'approximation consistant à négliger H(t) pour $|t| \geq 2T$, ce qui simplifie les calculs.

Les échantillons de sortie $r_k$ du filtre adapté 46 sont stockés dans une mémoire 48 pour être traités par le contrôleur 50 du démodulateur 24.

Le contrôleur 50 traite le signal filtré $r_k$ par segments correspondant chacun à une trame de 168 symboles binaires émis $a_k$ ($0 \leq k < 168$). Comme le montre la figure 2, cette trame correspond, après le codage différentiel implicite des bits $c_k$, aux 152 bits d'information d'une trame encadrés par les 8 bits du mot de synchronisation précédent et par les 8 bits du mot de synchronisation suivant.

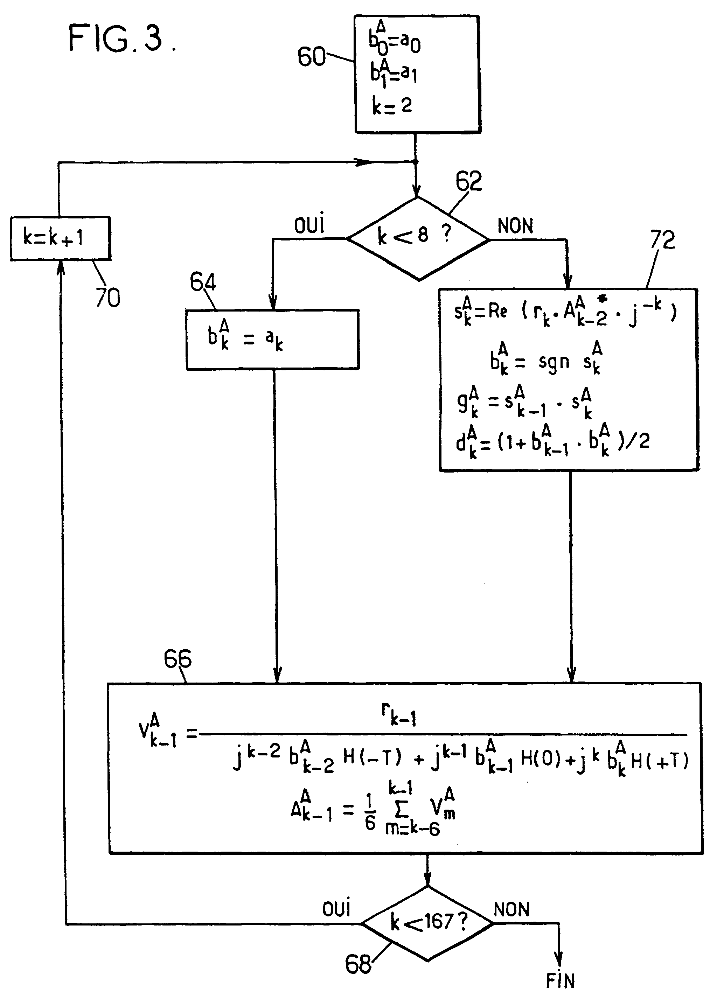

Le contrôleur 50 effectue la démodulation selon un algorithme séquentiel, dont une première phase est représentée sur l'organigramme de la figure 3. Dans cette première phase, on commence par estimer la réponse complexe du canal au début du segment, puis on démodule ce segment du début vers la fin en mettant à jour à chaque temps-bit l'estimation de la réponse complexe du canal.

A l'initialisation 60 de cette première phase, les bits $b_0^A$ et $b_1^A$ sont respectivement pris égaux aux symboles binaires connus $a_0$ et $a_1$, et l'index k est initialisé à 2. A l'étape 62, l'index k est comparé à 8, c'est-à-dire à la longueur du mot de synchronisation. Si k<8, le bit $b_k^A$ est pris égal au bit connu $a_k$ du mot de synchronisation à l'étape 64, puis on procède, à l'étape 66, à une estimation instantanée $V_{k-1}^A$ du canal de propagation, en effectuant la division complexe

$$V_{k-1}^A = \frac{r_{k-1}}{j^{k-2} b_{k-2}^A H(-T) + j^{k-1} b_{k-1}^A H(0) + j^k b_k^A H(+T)} \tag{5}$$

Un filtrage des estimations instantanées $V_m^A$ permet de lisser les effets du bruit gaussien pour fournir l'estimation $A_{k-1}^A$ servant à la démodulation des bits. Dans l'exemple représenté sur la figure 3, ce filtrage est simplement le calcul de la moyenne arithmétique des six dernières estimations instantanées $V_m^A$. On pourrait également employer d'autres types de filtrage. Après l'étape 66, l'index k est comparé à 167 (la longueur de la trame) à l'étape 68. Tant que k<167, l'index k est incrémenté d'une unité à l'étape 70 avant de revenir à l'étape 62.

L'estimation du canal au début de la trame est terminée lorsque k=8 au test 62. On dispose alors de l'estimation $A_6^A$ obtenue grâce à la connaissance du mot de synchronisation. Pour chaque valeur de $k \geq 8$, le softbit $s_k^A$ est estimé à l'étape 72 selon :

$$s_k^A = \text{Re} \left( r_k . A_{k-2}^{A*} . j^{-k} \right) \tag{6}$$

et l'estimation $b_k^A$ du bit $a_k$ est obtenue par le signe du softbit $s_k^A$. A l'étape 72, le contrôleur 50 procède également au décodage différentiel pour estimer les bits $c_k$ par l'opération $g_k^A = s_k^A . s_{k-1}^A$ dans le cas d'estimations douces (avec $s_7^A = \text{Re}(r_7 . A_6^{A*} . j^{-7})$ pour k=8), et par l'opération $d_k^A = (1 + b_k^A . b_{k-1}^A)/2$ dans le cas d'estimations dures.

Ayant obtenu ce bit $b_k^A$, le contrôleur 50 réestime le canal à l'étape 66 comme exposé précédemment. La démodulation dans le sens aller est terminée lorsque k=167 lors du test 68.

On voit sur la figure 3 qu'une erreur faite sur un bit $b_k^A$ à l'étape 72, due par exemple à un évanouissement du canal ou à un bruit impulsif, provoque des distorsions dans les estimations instantanées $V_{k-1}^A$, $V_k^A$ et $V_{k+1}^A$ faites dans les trois étapes 66 suivantes, et conduit ainsi à des erreurs d'estimation du canal qui se propagent pendant un certain temps du fait du filtre de lissage. Ces erreurs dans les $A_k^A$ peuvent à leur tour générer d'autres erreurs d'estimation des bits.

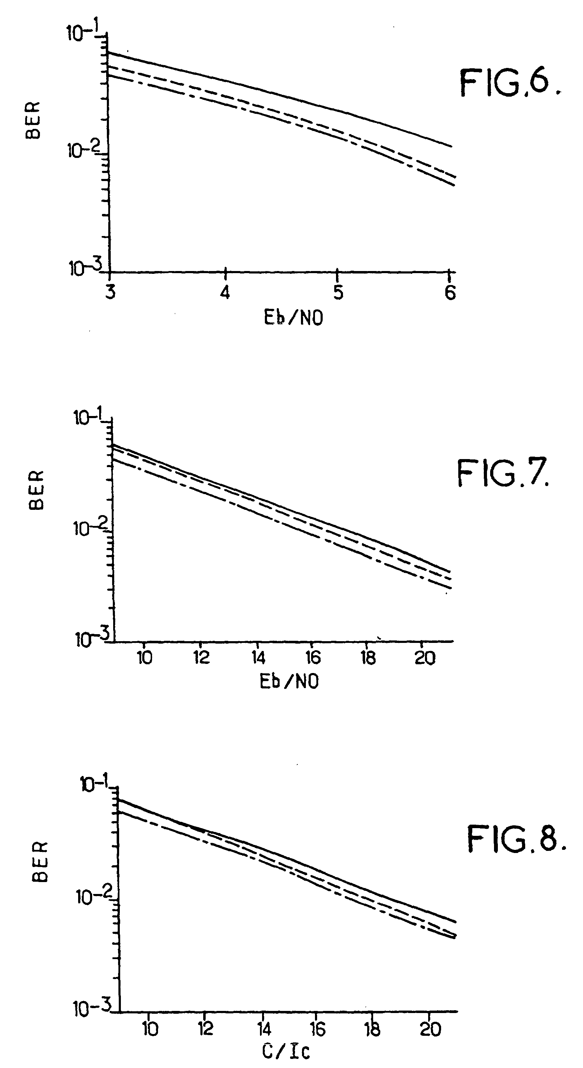

La figure 5 montre ainsi, dans le cas où le signal reçu a une énergie évoluant selon la courbe E en trait mixte (avec un évanouissement de canal survenant à l'instant $k_0$), que la vraisemblance $|s_k^A|$ des estimations (courbe en trait interrompu) est bonne avant l'évanouissement, mais met ensuite un certain temps à retrouver des valeurs en rapport avec l'énergie E du signal reçu.

Pour améliorer les performances dans la période suivant l'évanouissement, le contrôleur 50 procède à une autre démodulation du segment de signal correspondant à la trame de 168 bits depuis la fin du segment vers le début. Ceci permet d'obtenir des vraisemblances $|s_k^R|$ telles que celles représentées par la courbe en trait plein sur la figure 5. On voit que les performances du démodulateur seront améliorées si on privilégie les softbits $s_k^A$ avant l'évanouissement et les softbits $s_k^R$ après l'évanouissement.

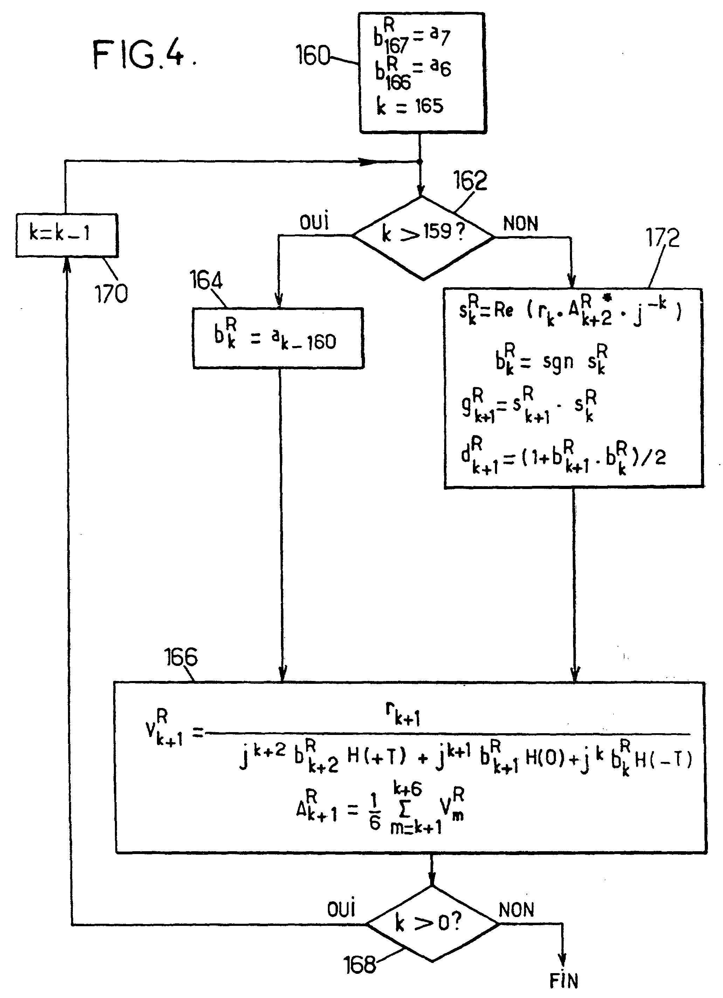

La démodulation retour s'effectue dans une seconde phase semblable à la première, dont l'organigramme est représenté sur la figure 4.

Dans cette seconde phase, on commence par estimer la réponse complexe du canal à la fin du segment, puis on démodule ce segment de la fin vers le début en mettant à jour à chaque temps-bit l'estimation de la réponse complexe du canal.

A l'initialisation 160 de cette seconde phase, les bits $b_{167}^R$ et $b_{166}^R$ sont respectivement pris égaux aux symboles binaires connus $a_7$ et $a_6$, et l'index k est initialisé à 165. A l'étape 162, l'index k est comparé à 159. Si k>159, le bit $b_k^R$ est pris égal au bit connu $a_{k-160}$ du mot de synchronisation à l'étape 164, puis on procède, à l'étape 166, à une estimation instantanée $V_{k+1}^R$ du canal de propagation, en effectuant la division complexe :

$$V_{k+1}^R = \frac{r_{k+1}}{j^{k+2} b_{k+2}^R H(+T) + j^{k+1} b_{k+1}^R H(0) + j^k b_k^R H(-T)} \qquad (7)$$

Un filtrage des estimations instantanées $V_m^R$ permet de lisser les effets du bruit gaussien pour fournir l'estimation $A_{k+1}^R$ servant à la démodulation des bits. Dans l'exemple représenté sur la figure 4, ce filtrage est simplement le calcul de la moyenne arithmétique des six dernières estimations instantanées $V_m^R$. Après l'étape 166, l'index k est comparé à 0 à l'étape 168. Tant que k>0, l'index k est décrémenté d'une unité à l'étape 170 avant de revenir à l'étape 162.

L'estimation du canal à la fin de la trame est terminée lorsque k=159 au test 162. On dispose alors de l'estimation $A_{161}^R$ obtenue grâce à la connaissance du mot de synchronisation. Pour chaque valeur de k≤159, le softbit $s_k^R$ est estimé à l'étape 172 selon :

$$s_k^R = \mathrm{Re}\left(r_k . A_{k+2}^{R*} . j^{-k}\right) \qquad (8)$$

et l'estimation $b_k^R$ du bit $a_k$ est obtenue par le signe du softbit $s_k^R$. A l'étape 172, le contrôleur 50 procède également au décodage différentiel pour estimer les bits $c_{k+1}$, par l'opération $g_{k+1}^R = s_{k+1}^R . s_k^R$ dans le cas d'estimations douces (avec $s_{160}^R = \mathrm{Re}(r_{160} . A_{161}^{R*} . j^{-160})$ pour k=159), et par l'opération $d_{k+1}^R = (1 + b_{k+1}^R . b_k^R)/2$ dans le cas d'estimations dures.

Ayant obtenu ce bit $b_k^R$, le contrôleur 50 réestime le canal à l'étape 166 comme exposé précédemment. La démodulation dans le sens retour est terminée lorsque k=0 lors du test 168.

Dans l'exemple considéré ci-dessus, les paramètres de démodulation réestimés lors du parcours du segment démodulé dans chaque sens se limitent à la réponse complexe $A_k$ du canal de propagation. On comprendra qu'ils pourraient inclure d'autres paramètres tels que des paramètres représentatifs du bruit observé sur le canal de transmission. On peut ainsi calculer pour chaque sens de démodulation une moyenne quadratique des écarts $V_{k-1}^A - A_{k-1}^A$ (étape 66) ou $V_{k+1}^R - A_{k+1}^R$ (étape 166), pour estimer la puissance instantanée du bruit $NO_k^A$, $NO_k^R$ dans chaque sens de démodulation. On peut alors normaliser la valeur du softbit $s_k^A$ ou $s_k^R$ en la divisant par cette moyenne quadratique. Les estimations de puissance $NO_k^A$, $NO_k^R$ peuvent être constantes sur la trame considérée ; ce sont alors, par exemple, des moyennes des $|A_{k-1}^A - V_{k-1}^A|^2$ et des $|A_{k+1}^R - V_{k+1}^R|^2$ calculées sur l'ensemble de la trame. Si ces moyennes sont obtenues sur des fenêtres glissantes ou par filtrage, les estimations de la puissance du bruit peuvent être instantanées, c'est-à-dire dépendre de l'index k.

Bien qu'on ait représenté deux décodeurs canal distincts $26^A$, $26^R$ pour faciliter la lecture de la figure 1, on comprendra qu'il est également possible de prévoir un décodeur unique assurant successivement les deux décodages. Le premier décodage donne lieu à des bits estimés $y_k^A$, et le second décodage à des bits estimés $y_k^R$. Chaque décodeur

canal fournit en outre une mesure $Q^A$, $Q^R$ du degré d'erreur observé lors du décodage de la trame d'estimations reçue.

Dans le cas, par exemple, où le décodeur canal utilise un treillis de Viterbi pour un code convolutif (voir "The Viterbi Algorithm" par G.D. Forney, Proc. IEEE, Vol. 61, n°3, mars 1973, pages 268-278), la mesure $Q^A$ (ou $Q^R$) peut être :

- le nombre des symboles dont la valeur M-aire a été corrigée lors du décodage ;
- une fonction décroissante de la plus grande métrique ayant permis de sélectionner un trajet dans le treillis lors du décodage de la trame ;
- ou une autre mesure, pouvant dépendre de l'algorithme de décodage particulier mis en oeuvre, de la qualité observée par le décodeur.

En comparant les mesures de degré d'erreur $Q^A$ et $Q^R$, le dispositif récepteur sélectionne l'un ou l'autre des deux jeux d'estimations $g_k^A$ et $g_k^R$ (ou $d_k^A$ et $d_k^R$), à savoir celui pour lequel la mesure du degré d'erreur est la plus faible, comme schématisé sur la figure 1 par le soustracteur 96 et le commutateur 98 qui retient les bits décodés correspondants $y_k^A$ ou $y_k^R$ selon les valeurs relatives de $Q^A$ et $Q^R$. Les bits retenus $y_k$ sont fournis à un décodeur source 28 qui remet en forme l'information transmise.

Le dispositif récepteur choisit ainsi celui des deux sens de démodulation qui semble le meilleur du point de vue du décodage canal.

Il est à noter qu'il n'est pas nécessaire que le codage canal implique des bits de redondance pour chacun des bits émis. Ainsi, dans le cas précédemment évoqué en référence à la figure 2, où seuls 26 bits sur 126 sont codés avec redondance, ces 26 bits suffisent à porter un jugement sur la qualité des estimations démodulées. En d'autres termes, les 152 bits de la trame profitent de l'information de redondance contenue dans les 52 bits délivrés par le codeur convolutif.

Comme il est usuel en transmissions numériques, la forme particulière du codage à redondance appliqué, la permutation utilisée pour l'entrelacement et la forme d'onde modulante doivent faire l'objet d'une optimisation conjointe pour obtenir les meilleures performances dans chaque cas concret. Cette optimisation peut, de façon connue, être effectuée au moyen de simulations sur ordinateur du comportement du canal.

Les figures 6 à 8 illustrent les performances obtenues avec un procédé de démodulation selon la figure 1. Ces résultats ont été obtenus par simulation dans le cas de trames de signal numérique telles que représentées sur la figure 2 modulées en GMSK avec BT=0,25. Le démodulateur différait de celui représenté sur la figure 1 en ce que la démodulation n'était pas séquentielle mais selon un treillis de Viterbi ayant 8 états et 8 filtres adaptés, avec poursuite du vecteur d'onde. Ce treillis correspond à une mémoire de L=3 symboles dans une décomposition de Rimoldi du signal GMSK (voir B.E. RIMOLDI "A Decomposition Approach to CPM", IEEE Trans. on Information Theory, Vol. 34, n°2, mars 1988, pages 260-270). Le treillis délivrait ainsi directement les estimations dures $d_k^A$, $d_k^R$ correspondant aux bits $c_k$, sans décodage différentiel. L'entrelacement des bits $e_k$ (k=0,...,151) effectué par le codeur canal 14 pour fournir les bits $c_k$ était opéré selon $e_k=c_{8+Tab(k)}$ avec [Tab(0),Tab(1),...,Tab(151)] =
[56, 0, 112, 8, 55, 16, 104, 136, 24, 120, 88, 32, 72, 96, 40, 128, 108, 48, 80, 60, 4, 144, 116, 12, 68, 132, 20, 124, 84, 28, 76, 140, 36, 148, 92, 44, 100, 52, 2, 106, 58, 10, 66, 114, 18, 122, 130, 26, 74, 138, 34, 82, 90, 42, 146, 110, 50, 98, 62, 6, 70, 118, 14, 126, 134, 22, 78, 86, 30, 142, 94, 38, 150, 54, 46, 102, 57, 1, 113, 9, 65, 17, 105, 129, 25, 121, 137, 33, 73, 89, 41, 81, 109, 49, 145, 61, 5, 97, 117, 13, 69, 133, 21, 125, 85, 29, 77, 141, 37, 149, 93, 45, 101, 53, 3, 67, 107, 11, 123, 59, 19, 75, 115, 27, 83, 131, 35, 147, 139, 43, 99, 91, 51, 71, 111, 7, 127, 63, 15, 79, 119, 23, 143, 135, 31, 151, 87, 39, 103, 95, 47, 64].

Le décodeur canal $26^A$ ou $26^R$ effectue la permutation inverse pour le désentrelacement, puis décode les 52 premiers bits obtenus avec un treillis de Viterbi à décisions dures correspondant au code convolutif employé.

Le graphique de la figure 6 montre le taux d'erreur binaire obtenu en fonction du rapport signal/bruit Eb/N0 dans le cas où les dispositifs émetteur et récepteur sont statiques. Le graphique de la figure 7 illustre un fading dynamique avec une vitesse relative de 70 km/h. La courbe en traits pleins représente le taux d'erreur binaire observé avec une démodulation dans un seul sens, la courbe en pointillés représente les performances obtenues selon l'invention avec une démodulation aller-retour et une sélection de sens selon la figure 1, et la courbe en traits mixtes les performances théoriques d'un démodulateur idéal (c'est-à-dire ayant une connaissance parfaite et instantanée du canal). La figure 8 montre le taux d'erreur binaire observé en dynamique (70 km/h) avec un interféreur décorrélé présent sur le même canal fréquentiel. En abscisses, la quantité C/Ic représente le rapport des puissances reçues par le dispositif récepteur depuis le dispositif émetteur et depuis l'interféreur. Dans les trois cas, on observe une amélioration sensible du taux d'erreur binaire.

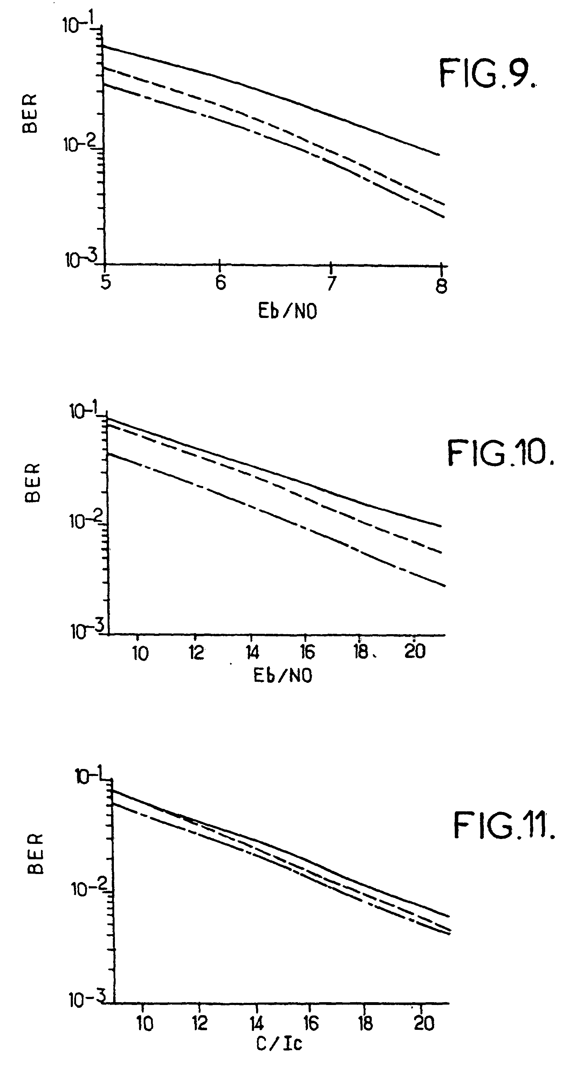

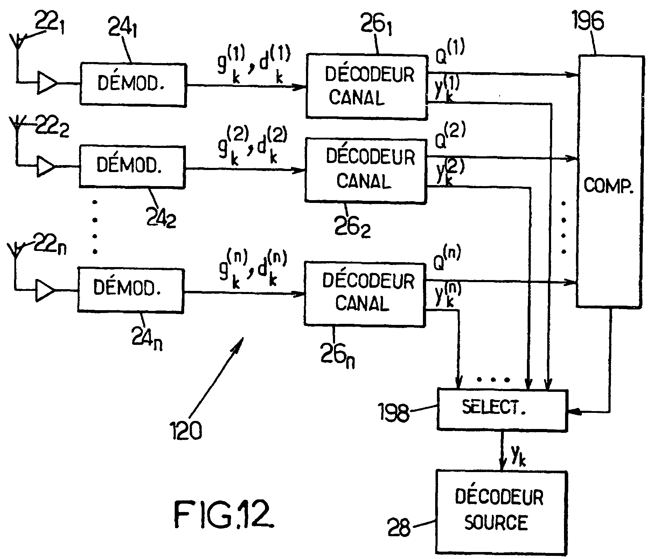

Les figures 9 à 11 sont des graphiques semblables, respectivement, à ceux des figures 6 à 8, montrant des résultats obtenus dans des conditions de simulation semblables, différant seulement par le type de modulation employé. Il s'agissait d'une modulation quaternaire (M=4). Les bits $c_k$ délivrés par le codeur canal étaient regroupés par paires pour former des symboles quaternaires traités par le modulateur. Les estimations dures des symboles délivrées par le démodulateur dans le sens aller ou retour étaient ensuite décomposées en deux estimations dures des bits $c_k$ correspondants. La modulation quaternaire considérée était une modulation à phase continue (CPM) de paramètre BT=0,25 avec l'approximation d'une mémoire de L=3 symboles pour la construction du treillis de démodulation selon la décomposition de Rimoldi. L'indice de modulation était h=1/3, le démodulateur employant un treillis à 48 états et 64 filtres adaptés.

La figure 12 montre un autre exemple de dispositif récepteur apte à mettre en oeuvre la présente invention. Ce dispositif 120 fait appel à une diversité en réception qui, dans l'exemple considéré, est une diversité spatiale, le dispositif comportant n antennes $22_1,...,22_n$ et n démodulateurs associés $24_1,...,24_n$. Chaque démodulateur $24_i$ opère dans un seul sens sur un segment de signal respectif fourni par son antenne $22_i$ (par exemple comme décrit en référence à la figure 3), et délivre des estimations douces respectives $g_k^{(i)}$ et/ou des estimations dur es respectives $d_k^{(i)}$ pour chaque symbole $c_k$. Le dispositif 120 dispose ainsi de N=n estimations par symbole provenant de segments de signal différents au lieu de N=2 estimations tirées du même segment de signal dans l'exemple de réalisation des figures 1 à 11.

Ces n jeux d'estimations sont décodés conformément à la protection apportée par le codeur canal, en parallèle par n décodeurs canal $26_1,...,26_n$ (ou encore successivement par un unique décodeur). Le dispositif 120 obtient ainsi n jeux de symboles décodés $y_k^{(1)},...,y_k^{(n)}$ et n mesures de degré d'erreur $Q^{(1)},...,Q^{(n)}$ associées. Un comparateur 196 détermine le jeu d'estimations $g_k^{(i)}$ ou $d_k^{(i)}$ pour lequel le degré d'erreur mesuré $Q^{(i)}$ est minimal, et après décodage, ce jeu est finalement retenu par le module de sélection 198 pour alimenter le décodeur source 28.

L'invention est bien entendu applicable à d'autres techniques de diversité, ou à des récepteurs combinant une technique de diversité avec une méthode de démodulations multiples telle que celle décrite ci-dessus.

## Revendications

**1.** Procédé de démodulation numérique et de décodage, dans lequel un dispositif récepteur (20;120) effectue N démodulations distinctes (N≥2) fournissant chacune un jeu d'estimations respectives de symboles successifs ($c_k$) d'une trame, certains de ces symboles comportant de la redondance introduite par un codage correcteur d'erreurs appliqué par un dispositif émetteur (10), **caractérisé en ce que** le dispositif récepteur (20;120) décode chacun des N jeux d'estimations selon un processus complémentaire dudit codage correcteur d'erreurs, le décodage de chaque jeu d'estimations comportant une mesure d'un degré d'erreur ($Q^{(i)}$), le dispositif récepteur sélectionnant un des N jeux d'estimations pour lequel le degré d'erreur mesuré est minimal.

**2.** Procédé selon la revendication 1, **caractérisé en ce que** le degré d'erreur ($Q^{(i)}$) mesuré lors d'un décodage est le nombre de symboles modifiés au cours dudit décodage.

**3.** Procédé selon la revendication 1 ou 2, **caractérisé en ce que** les symboles de la trame sont entrelacés, le dispositif récepteur (20;120) effectuant un désentrelacement avant le décodage de chacun des N jeux d'estimations.

**4.** Procédé selon la revendication 1, 2 ou 3, **caractérisé en ce qu'**au moins deux des N démodulations distinctes sont effectuées sur un même segment de signal correspondant à une trame de symboles d'un signal numérique modulé par le dispositif émetteur (10), ledit segment de signal (r(t)) étant reçu par le dispositif récepteur (20) après transmission du signal numérique modulé (s(t)) par l'intermédiaire d'un canal de transmission, **en ce que** la première de ces deux démodulations comprend les étapes suivantes :

- estimation de premiers paramètres de démodulation ($A_k^A$) à une première extrémité du segment ; et
- calcul de premières estimations ($g_k^A$) de symboles de la trame sur la base des premiers paramètres de démodulation estimés et du segment de signal parcouru depuis la première extrémité vers une seconde extrémité,

  et **en ce que** la seconde de ces deux démodulations comprend les étapes suivantes :

- estimation de seconds paramètres de démodulation ($A_k^R$) à la seconde extrémité du segment ; et
- calcul de secondes estimations ($g_k^R$) de symboles de la trame sur la base des seconds paramètres de démodulation estimés et du segment de signal parcouru depuis la seconde extrémité vers la première extrémité.

**5.** Procédé selon la revendication 4, **caractérisé en ce que** les premiers paramètres de démodulation sont réestimés au moins une fois lors du parcours du segment à partir de la première extrémité, et les seconds paramètres de démodulation sont réestimés au moins une fois lors du parcours du segment à partir de la seconde extrémité.

**6.** Procédé selon la revendication 4 ou 5, **caractérisé en ce que** les premiers et seconds paramètres de démodulation comprennent chacun au moins un paramètre ($A_k^A$, $A_k^R$) représentant la réponse du canal de transmission.

**7.** Procédé selon la revendication 6, **caractérisé en ce que** le dispositif récepteur (20) estime lesdits paramètres représentant la réponse du canal de transmission aux extrémités du segment sur la base de séquences de synchronisation incluses aux extrémités des trames de signal numérique.

**8.** Procédé selon l'une quelconque des revendications 4 à 7, **caractérisé en ce que** les premiers et seconds paramètres de démodulation comprennent chacun au moins un paramètre relatif au bruit observé sur le canal de transmission.

**9.** Procédé selon la revendication 8, **caractérisé en ce que** les premiers paramètres de démodulation comprennent la puissance du bruit dont l'estimation ($N0_k^A$) est utilisée pour normaliser les premières estimations des symboles de la trame, et **en ce que** les seconds paramètres de démodulation comprennent la puissance du bruit dont l'estimation ($N0_k^R$) est utilisée pour normaliser les secondes estimations des symboles de la trame.

**10.** Procédé selon l'une quelconque des revendications 1 à 9, **caractérisé en ce qu'**au moins deux des N démodulations distinctes sont effectuées sur deux segments de signal respectifs, reçus par le dispositif récepteur (120) selon une technique de diversité.

**Claims**

**1.** A digital demodulation and decoding method wherein a receiver (20; 120) effects N separate demodulations (N ≥ 2) each supplying a set of respective estimates of successive symbols ($c_k$) of a frame, some of said symbols comprising redundancy introduced by error corrector coding applied by a transmitter (10), which method is **characterised in that** the receiver (20; 120) decodes each of the N sets of estimates in accordance with a process complementary to said error corrector coding, the decoding of each set of estimates including a measurement of an error rate ($Q^{(i)}$), the receiver selecting that of the N sets of estimates which has the minimum measured error rate.

**2.** A method according to claim 1, **characterised in that** the error rate ($Q^{(i)}$) measured during decoding is the number of symbols modified during said decoding.

**3.** A method according to claim 1 or claim 2, **characterised in that** the symbols of the frame are interleaved and the receiver (20; 120) applies de-interleaving before decoding each of the N sets of estimates.

**4.** A method according to claim 1, claim 2 or claim 3, **characterised in that**, firstly, at least two of the N separate demodulations are effected on the same signal segment corresponding to a frame of symbols of a digital signal modulated by the transmitter (10), said signal segment (r(t)) being received by the receiver (20) after transmission of the modulated digital signal (s(t)) via a transmission channel, secondly, the first of the two demodulations comprises the following steps:

- estimating first demodulation parameters ($A_k^A$) at a first end of the segment; and
- calculating first estimates ($g_k^A$) of symbols of the frame on the basis of the first estimated demodulation parameters and the signal segment in the direction from the first end toward a second end, and, thirdly, the second of the two demodulations comprises the following steps:

- estimating second demodulation parameters ($A_k^R$) at the second end of the segment; and
- calculating second estimates ($g_k^R$) of symbols of the frame on the basis of the second estimated demodulation parameters and the signal segment in the direction from the second end toward the first end.

**5.** A method according to claim 4, **characterised in that** the first demodulation parameters are re-estimated at least once over the segment from the first end and the second demodulation parameters are re-estimated at least once over the segment from the second end.

**6.** A method according to claim 4 or claim 5, **characterised in that** the first and second demodulation parameters each comprise at least one parameter ($A_k^A$, $A_k^R$) representing the response of the transmission channel.

7. A method according to claim 6, **characterised in that** the receiver (20) estimates said parameters representing the response of the transmission channel at the ends of the segment on the basis of synchronisation sequences included at the ends of the digital signal frames.

8. A method according to any of claims 4 to 7, **characterised in that** the first and second demodulation parameters each comprise at least one parameter relating to the noise on the transmission channel.

9. A method according to claim 8, **characterised in that** the first demodulation parameters comprise the power of the noise whose estimate ($N0_k^A$) is used to normalise the first estimates of the symbols of the frame and the second demodulation parameters comprise the power of the noise whose estimate ($N0_k^R$) is used to normalise the second estimates of the symbols of the frame.

10. A method according to any of claims 1 to 9, **characterised in that** at least two of the N separate demodulations are effected over two respective signal segments received by the receiver (120) using a diversity technique.

**Patentansprüche**

1. Verfahren zur digitalen Demodulation und zur Decodierung, in dem eine Empfangsvorrichtung (20; 120) N verschiedene Demodulationen ausführt ($N \geq 2$), deren jede einen Satz von Bewertungen jeweils für aufeinander folgende Symbole ($c_k$) eines Rasters liefert, wobei bestimmte von diesen Symbolen Redundanz aufweisen, die durch eine von einer Sendevorrichtung (10) angewendete Fehlerkorrekturcodierung eingeführt wird, **dadurch gekennzeichnet, dass** die Empfangsvorrichtung (20; 120) jeden der N Sätze von Bewertungen gemäß einem die besagte Fehlerkorrekturcodierung ergänzenden Prozess decodiert, wobei die Decodierung jedes Satzes von Bewertungen eine Messung eines Fehlergrades ($Q^{(i)}$) umfasst, und die Empfangsvorrichtung einen der N Sätze von Bewertungen auswählt, für welchen der gemessene Fehlergrad minimal ist.

2. Verfahren nach Anspruch 1, **dadurch gekennzeichnet, dass** der bei einer Decodierung gemessene Fehlergrad ($Q^{(i)}$) die Anzahl der während des Ablaufs besagter Decodierung modifizierten Signale ist.

3. Verfahren nach Anspruch 1 oder 2, **dadurch gekennzeichnet, dass** die Symbole des Rasters verflochten sind, wobei die Empfangsvorrichtung (20; 120) vor der Decodierung jedes der N Sätze von Bewertungen eine Entflechtung ausführt.

4. Verfahren nach Anspruch 1, 2 oder 3, **dadurch gekennzeichnet, dass** mindestens zwei der N verschiedenen Demodulationen an ein und demselben Signalsegment ausgeführt werden, das einem Raster von Symbolen eines digitalen, von der Sendevorrichtung (10) modulierten Signals entspricht, wobei das besagte Signalsegment (r(t)) von der Empfangsvorrichtung (20) nach der Übertragung des digitalen modulierten Signals (s(t)) über einen Übertragungskanal empfangen wird, und dadurch, dass die erste dieser beiden Demodulationen folgende Schritte umfasst:

   - Bewertung der ersten Demodulationsparameter ($A_k^A$) an einem ersten Ende des Segments; und
   - Berechnung von ersten Bewertungen ($g_k^A$) von Symbolen des Rasters auf der Basis der ersten geschätzten Demodulationsparameter und aus dem vom ersten Ende zu einem zweiten Ende durchlaufenen Signalsegment,

   und dadurch, dass die zweite dieser beiden Demodulationen folgende Schritte umfasst:

   - Bewertung zweiter Demodulationsparameter ($A_k^R$) am zweiten Ende des Segments; und
   - Berechnung von zweiten Bewertungen ($g_k^R$) von Symbolen des Rasters auf der Basis der zweiten bewerteten Demodulationsparameter und aus dem vom zweiten Ende zum ersten Ende hin durchlaufenen Signalsegment.

5. Verfahren nach Anspruch 4, **dadurch gekennzeichnet, dass** die ersten Demodulationsparameter mindestens einmal während des Durchlaufens des Segments vom ersten Ende aus noch einmal bewertet werden, und dass die zweiten Demodulationsparameter mindestens einmal während des Durchlaufens des Segments vom zweiten Ende aus noch einmal bewertet werden.

6. Verfahren nach Anspruch 4 oder 5, **dadurch gekennzeichnet, dass** die ersten und zweiten Demodulationsparameter jeder mindestens einen die Antwort des Übertragungskanals repräsentierenden Parameter ($A_k^A$, $A_k^R$) umfassen.

7. Verfahren nach Anspruch 6, **dadurch gekennzeichnet, dass** die Empfangsvorrichtung (20) besagte, die Antwort des Übertragungskanals repräsentierenden Parameter an den Enden des Segments auf der Basis von Synchronisations-Sequenzen bewertet, die an den Enden der Raster des digitalen Signals enthalten sind.

8. Verfahren nach einem der vorstehenden Ansprüche 4 bis 7, **dadurch gekennzeichnet, dass** die ersten und zweiten Demodulationsparameter jeder mindestens einen auf das auf dem Übertragungskanal beobachtete Rauschen bezogenen Parameter umfassen.

9. Verfahren nach Anspruch 8, **dadurch gekennzeichnet, dass** die ersten Demodulationsparameter die Rauschleistung umfassen, deren Bewertung ($NO_k^A$) genutzt wird, um die ersten Bewertungen der Rastersymbole zu normalisieren, und dadurch, dass die zweiten Demodulationsparameter die Rauschleistung umfassen, deren Bewertung ($NO_k^R$) genutzt wird, um die ersten Bewertungen der Rastersymbole zu normalisieren.

10. Verfahren nach einem der Ansprüche 1 bis 9, **dadurch gekennzeichnet, dass** mindestens zwei der N verschiedenen Demodulationen an jeweils zwei Signalsegmenten ausgeführt werden, welche von der Empfangsvorrichtung (120) nach einer Diversity-Technik empfangen wurden.

FIG.1.

EP 0 821 500 B1

FIG.2.

FIG.5.

FIG.3.

60 —

$$b_0^A = a_0$$
$$b_1^A = a_1$$
$$k = 2$$

62

$$k < 8 \ ?$$

OUI — NON

70

$$k = k+1$$

64

$$b_k^A = a_k$$

72

$$s_k^A = \mathrm{Re} \ ( \ r_k \cdot A_{k-2}^{A \ *} \cdot j^{-k} \ )$$
$$b_k^A = \mathrm{sgn} \ s_k^A$$
$$g_k^A = s_{k-1}^A \cdot s_k^A$$
$$d_k^A = (1 + b_{k-1}^A \cdot b_k^A)/2$$

66

$$v_{k-1}^A = \frac{r_{k-1}}{j^{k-2} \, b_{k-2}^A \, H(-T) + j^{k-1} \, b_{k-1}^A \, H(0) + j^k \, b_k^A \, H(+T)}$$
$$A_{k-1}^A = \frac{1}{6} \sum_{m=k-6}^{k-1} v_m^A$$

68

$$k < 167 ?$$

OUI — NON

FIN

FIG.4.

$$160 \quad \begin{array}{c} b^{R}_{167} = a_7 \\ b^{R}_{166} = a_6 \\ k = 165 \end{array}$$

$$k = k - 1$$

170

$$162 \quad k > 159 ?$$

oui     NON

$$164 \quad b^{R}_{k} = a_{k-160}$$

$$172$$

$$s^{R}_{k} = Re \; ( r_k \cdot A^{R \, *}_{k+2} \cdot j^{-k} )$$

$$b^{R}_{k} = sgn \; s^{R}_{k}$$

$$g^{R}_{k+1} = s^{R}_{k+1} \cdot s^{R}_{k}$$

$$d^{R}_{k+1} = (1 + b^{R}_{k+1} \cdot b^{R}_{k}) / 2$$

$$166$$

$$v^{R}_{k+1} = \frac{r_{k+1}}{j^{k+2} \, b^{R}_{k+2} \, H(+T) + j^{k+1} \, b^{R}_{k+1} \, H(0) + j^{k} \, b^{R}_{k} \, H(-T)}$$

$$A^{R}_{k+1} = \frac{1}{6} \sum_{m=k+1}^{k+6} V^{R}_{m}$$

oui     $k > 0 ?$     NON

168

FIN

FIG.6.

FIG.7.

FIG.8.

FIG.9.

FIG.10.

FIG.11.

EP 0 821 500 B1

FIG.12